# EUROPÄISCHE PATENTSCHRIFT

(11) **EP 3 250 445 B1**
(45) Veröffentlichungstag und Bekanntmachung des Hinweises auf die Patenterteilung: **12.12.2018**
(21) Anmeldenummer: 16702021.3
(22) Anmeldetag: 19.01.2016
(51) Int. Cl.: B62D 21/04, B62D 33/07, B62D 21/15, B62D 33/06, B62D 33/077

(54) **LAGERUNGSANORDNUNG FÜR EIN FAHRERHAUS EINES LASTKRAFTWAGENS**
BEARING ASSEMBLY FOR A CAB OF A LORRY
DISPOSITIF DE LOGEMENT POUR UNE CABINE D'UN POIDS LOURD

(30) Priorität: 27.01.2015 DE 102015000966
(43) Veröffentlichungstag der Anmeldung: 06.12.2017
(73) Patentinhaber: Daimler AG, 70327 Stuttgart (DE)
(72) Erfinder: MARTIN, Gerd, 70372 Stuttgart (DE)
(74) Vertreter: JENSEN & SON
(86) Internationale Anmeldenummer: PCT/EP2016/000083
(87) Internationale Veröffentlichungsnummer: WO 2016/119999

(56) Entgegenhaltungen:
- EP-A1- 0 798 198
- DE-A1-102005 014 402
- DE-A1-102006 008 090
- DE-A1-102008 003 488
- DE-B3-102005 018 828
- DE-B3-102005 018 830
- DE-C1- 10 221 346
- JP-A- H10 316 013

## Beschreibung

Die Erfindung betrifft eine Lagerungsanordnung für ein Fahrerhaus eines Lastkraftwagens gemäß dem Oberbegriff von Patentanspruch 1.

Eine derartige Lagerungsanordnung ist beispielsweise bereits aus der DE 10 2005 014 402 A1 bekannt und umfasst dort - da es sich um eine sogenannte Fahrerhauskomfortlagerung handelt - ein Stabilisatorelement in Form einer Stabilisatorschwinge, welche pro Fahrzeugseite jeweils einen Lenker umfasst, der mit einem seitlich korrespondierenden Feder-Dämpfer-Element verbunden und mit einem Ende mit einem Lagerelement an eine seitlich zugeordneten, rahmenseitigen Konsole in einer Führung gelagert ist. Entlang dieser Führung ist das jeweilige Lagerelement des korrespondierenden Lenkers bei einer unfallbedingten Kraftbeaufschlagung verlagerbar, um somit das Fahrerhaus einerseits aus der Gefahrenzone, also dem Hindernis herauszuziehen, und andererseits dennoch eine feste Verbindung am Rahmen des Fahrzeugs beizubehalten.

Neben der hier beschriebenen Fahrerhauskomfortlagerung gibt es auch sogenannte Fahrerhausstandartlagerungen, bei welchen anstelle über die Stabilisatorschwinge das jeweilige seitliche Fahrerhauslager unter Vermittlung des entsprechenden Feder-Dämpfer-Elements über das entsprechende Lagerelement am der seitlich zugeordneten, rahmenseitigen Konsole in der Führung gelagert ist. Insoweit besteht bei der Führung des jeweiligen Lagerelements an der seitlich zugeordneten Konsole kein Unterschied, ob es sich um eine Fahrerhauskomfortlagerung oder eine Fahrerhausstandartlagerung handelt.

Aufgabe der vorliegenden Erfindung ist es, eine Lagerungsanordnung der eingangs genannten Art zu schaffen, deren Unfallverhalten weiter verbessert ist.

Diese Aufgabe wird erfindungsgemäß durch eine Lagerungsanordnung mit den Merkmalen des Patentanspruchs 1 gelöst. Vorteilhafte Ausgestaltungen mit zweckmäßigen Weiterbildungen der Erfindung sind in den übrigen Patentansprüchen angegeben.

Um eine Lagerungsanordnung zu schaffen, deren Unfallverhalten weiter verbessert ist, ist es erfindungsgemäß vorgesehen, dass das Lagerelement mit dem seitlich zugeordneten Rahmenelement des Tragrahmens über eine Schwächungseinrichtung verbunden ist, mittels welcher bei einer unfallbedingten Verlagerung des Lagerelements das seitlich zugeordnete Rahmenelement des Tragrahmens gezielt schwächbar ist.

Mit einer unfallbedingten Rückverlagerung des jeweiligen Lagerelements wird somit - durch die Schwächungseinrichtung - zwangsweise eine gezielte Schwächung des Rahmenelements für den Unfall eingeleitet, welche das Deformationsverhalten des Tragrahmens des Lastkraftwagens vorteilhafter Weise beeinflusst. Dennoch wird eine feste Verbindung am Rahmen des Fahrzeugs beibehalten. Insbesondere kann anhand des Weges, welches das entsprechende Lagerelement in der zugehörigen Führung der Konsole zurücklegt, der Grad der Zwangsverformung des Rahmenelements bestimmt werden, so dass sich die Startkräfte beim Verformungsstart beziehungsweise die Verbindungskräfte der Schwächungseinrichtung zum Rahmenelement des Tragrahmens einstellen lassen. Somit kann eine optimale Abstimmung des Deformationsverhaltens des Tragrahmens in Abhängigkeit von der jeweiligen Fahrerhauslagerung erzielt werden.

Die vorliegende Erfindung eignet sich dabei gleichermaßen für eine Fahrerhauskomfortlagerung, bei der ein Stabilisatorelement in Form einer Stabilisatorschwinge, welche pro Fahrzeugseite jeweils einen Lenker umfasst, der mit einem seitlich korrespondierenden Feder-Dämpfer-Element verbunden und mit einem Ende mit einem Lagerelement an eine seitlich zugeordneten, rahmenseitigen Konsole in einer Führung gelagert ist, als auch für eine Fahrerhausstandartlagerungen, bei welchen anstelle über die Stabilisatorschwinge das jeweilige seitliche Fahrerhauslager unter Vermittlung des entsprechenden Feder-Dämpfer-Elements über das entsprechende Lagerelement am der seitlich zugeordneten, rahmenseitigen Konsole in der Führung gelagert ist.

In weiterer Ausgestaltung der Erfindung hat es sich als vorteilhaft gezeigt, wenn die Schwächungseinrichtung mit einem Obergurt des seitlich zugeordneten Rahmenelements verbunden ist, welcher bei einer unfallbedingten Verlagerung des seitlich zugeordneten Lagerelements gezielt schwächbar ist. Durch die Schwächung des Obergurts lässt sich auf besonders günstige Weise ein Hochbiegen des Rahmenelements erreichen, welches sich vorteilhaft auf das Unfallverhalten des Lastkraftwagens auswirkt.

Eine weitere vorteilhafte Ausführungsform sieht vor, dass das Rahmenelement einen Schenkel aufweist, welcher im Befestigungsbereich der Schwächungseinrichtung eine Materialschwächung, insbesondere eine Öffnung, aufweist. Durch eine solche Materialschwächung kann das Deformationsverhalten des Rahmenelements besonders einfach und genau eingestellt werden, und zwar insbesondere auch in Abhängigkeit der Gestalt und Größe der gewählten Öffnung.

Weiterhin vorteilhaft ist es, wenn die Schwächungseinrichtung ein mit dem Lagerelement verbundenes Profilelement umfasst, welches sich zumindest im Wesentlichen in Richtung der Führung des Lagerelements erstreckt. Hierdurch ergibt sich eine besonders gute Abstimmung des Weges, den das Lagerelement infolge einer unfallbedingten Kraftbeaufschlagung zurücklegt, mit der Zwangsverformung des Rahmenelements, welche infolge der Verbindung des Lagerelements über die Schwächungseinrichtung gegeben ist.

In diesem Zusammenhang hat es sich als weiterhin vorteilhaft gezeigt, wenn das Profilelement über eine Schrauben-Hülse-Baueinheit mit dem seitlich korrespondierenden Obergurt des entsprechend zugeordneten Rahmenelements verbunden ist. Eine derartige Schrauben-Hülse-Baueinheit ist konstruktiv sehr einfach und dennoch hochwirksam und stabil.

Oft hat es sich in diesem Zusammenhang als vorteilhaft gezeigt, wenn das Profilelement an seinem Ende einen freien Schenkel aufweist, an welchem die Schrauben-Hülse-Baueinheit befestigt ist. Somit kann der freie Schenkel gegenüber dem restlichen Teil des Profilelements verformt, beispielsweise umgebogen, werden, um somit die Kraftübertragung zwischen Profilelement und Schrauben-Hülse-Baueinheit zu optimieren.

Eine weitere vorteilhafte Ausführungsform sieht vor, dass sich die Führung des Lagerelements zumindest im Wesentlichen horizontal erstreckt. Hierdurch lassen sich die insbesondere in Fahrzeuglängsrichtung und horizontal eingetragenen Unfallkräfte in besonders günstiger Weise abfangen und unter Vermittlung der Schwächungseinrichtung an das korrespondierende Rahmenelement weitergeben.

Weiterhin hat es sich als vorteilhaft gezeigt, wenn sich der jeweilige Lenker zumindest im Wesentlichen horizontal erstreckt. Hierdurch ergibt sich über den jeweiligen Lenker ein besonders günstiger Krafteintrag in horizontaler Richtung beziehungsweise in Fahrzeuglängsrichtung.

Damit die beschriebene Schwächungseinrichtung bei einer Fahrerhauskomfortlagerung zum Einsatz kommen kann, hat es sich als vorteilhaft gezeigt, das Lagerelement am Ende eines pro Fahrzeugseite vorgesehenen Lenkers eines Stabilisatorelements, insbesondere einer Stabilisatorschwinge, anzuordnen.

Damit alternativ hierzu die beschriebene Schwächungseinrichtung bei einer Fahrerhausstandartlagerung zum Einsatz kommen kann, hat es sich als vorteilhaft gezeigt, wenn ein jeweiliges seitliches Fahrerhauslager unter Vermittlung eines entsprechenden Feder-Dämpfer-Elements über das entsprechende Lagerelement an der seitlich zugeordneten, rahmenseitigen Konsole in der Führung gelagert ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

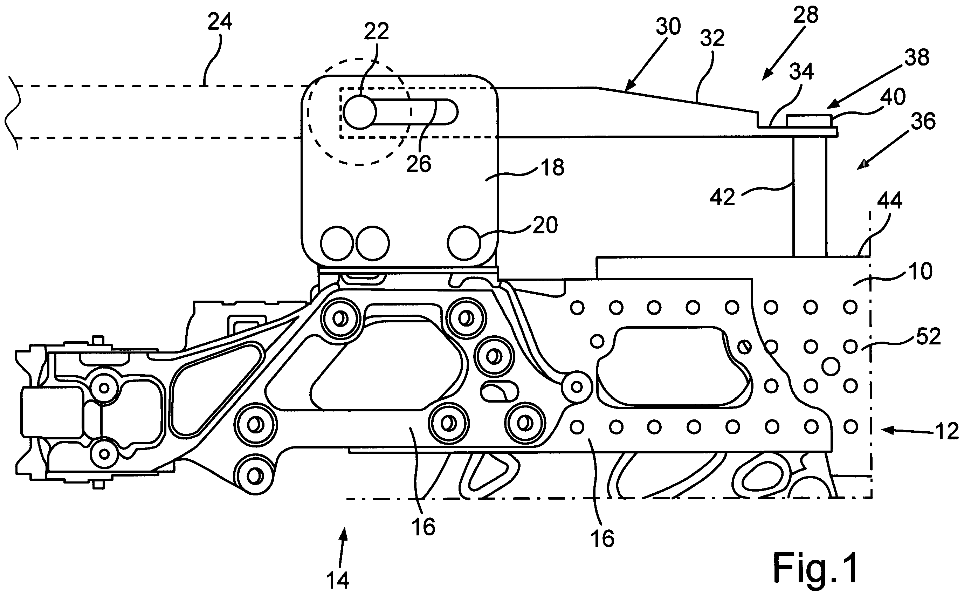

- Fig. 1: eine ausschnittsweise Seitenansicht auf eine Lagerungsanordnung für ein Fahrerhaus eines Lastkraftwagens mit einer Fahrerhauskomfortlagerung, mit einem an der jeweiligen Fahrzeugseite vorgesehenen Lenker eines Stabilisatorelements, der mit einem nicht erkennbaren, seitlich korrespondierenden Feder-Dämpfer-Element einer Fahrerhauslagerung verbunden ist und mit einem hinteren Ende mit einem Lagerelement an einer seitlich korrespondierenden rahmenseitigen Konsole in einer Führung gelagert ist, entlang welcher das Lagerelement bei einer unfallbedingten Kraftbeaufschlagung verlagerbar ist, wobei das Lagerelement vorliegend in einer Ausgangsstellung gezeigt ist, und mit einem seitlich zugeordneten Rahmenelement eines Tragrahmens des Lastkraftwagens über eine Schwächungseinrichtung verbunden ist;

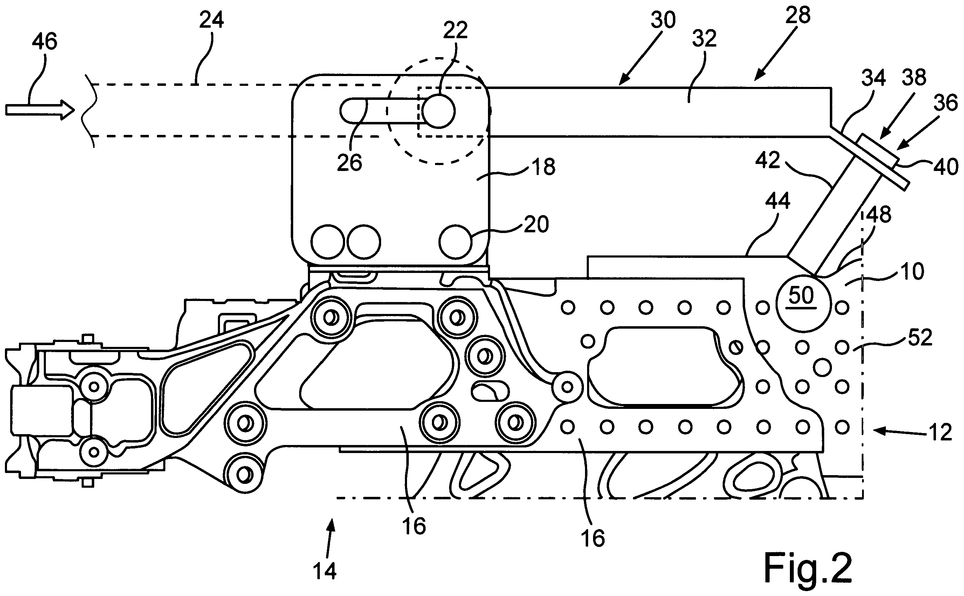

- Fig. 2: eine ausschnittsweise Seitenansicht auf die Lagerungsanordnung gemäß Fig. 1, wobei das entsprechende Lagerelement des Lenkers infolge einer unfallbedingten Kraftbeaufschlagung entlang der korrespondierenden, in der zugehörigen Konsole vorgesehenen Führung rückverlagert worden ist, wodurch das seitlich zugeordnete Rahmenelement des Tragrahmens mittels der Schwächungseinrichtung, über welche das Lagerelement mit dem Rahmenelement verbunden ist, gezielt geschwächt beziehungsweise deformiert worden ist; und in

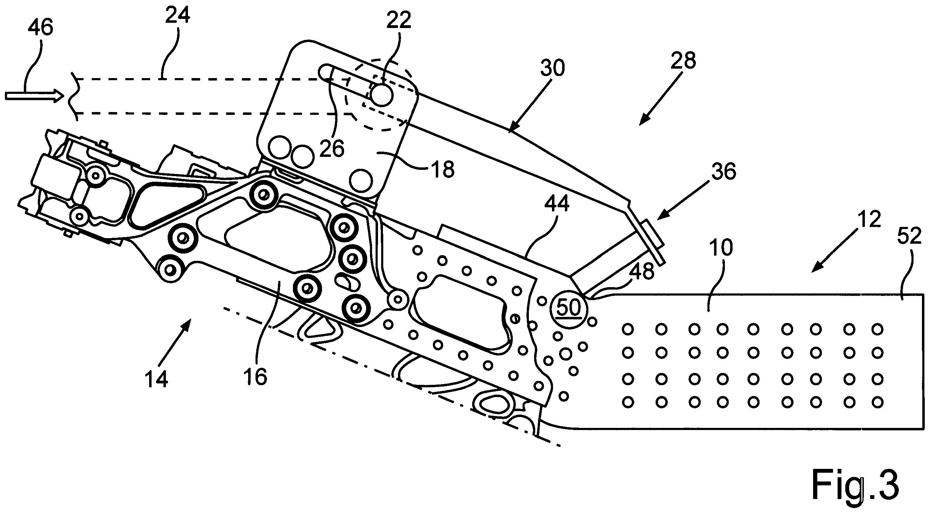

- Fig. 3: eine weitere, ausschnittsweise Seitenansicht auf die Lagerungsanordnung gemäß den Fig. 1 und 2, wobei im weiteren Verlauf des Unfallszenarios gemäß Fig. 2 infolge der Schwächung das Rahmenelement des Tragrahmens in Fahrzeughochrichtung nach oben gebogen worden ist.

I n Fig. 1 ist in einer ausschnittsweisen Seitenansicht eine Lagerungsanordnung für ein Fahrerhaus eines Lastkraftwagens mit einer sogenannten Fahrerhauskomfortlagerung dargestellt. Erkennbar ist dabei zunächst ein Rahmenelement 10 in Form eines im Wesentlichen im Querschnitt U-förmigen Rahmenlängsträgers auf der - in Vorwärtsfahrtrichtung betrachtet - linken Fahrzeugseite, welcher mit einem nicht erkennbaren, spiegelsymmetrisch ausgebildeten Rahmenelement beziehungsweise Rahmenlängsträger auf der gegenüberliegenden Fahrzeugseite einen Tragrahmen 12 des Lastkraftwagens bildet. Dieser Tragrahmen 12 ist beispielsweise in üblicher Weise dadurch gebildet, dass die jeweiligen Rahmenlängsträger 10 über mehrere Querträger in einem vorzugsweise im parallelen Abstand zueinander gehalten sind. An dem Tragrahmen 12 sind beispielsweise mehrere Achsen und ein Aufbau des Lastkraftwagens abgestützt.

Vorderseitig umfasst der Tragrahmen 12 eine Rahmenkonstruktion 14 mit jeweiligen Rahmenelementen 16, welche die eigentlichen Rahmenlängsträger 10 nach vorne hin verlängern und beispielsweise über jeweilige Schraubverbindungen mit dem seitlich korrespondierenden Rahmenlängsträger 10 verbunden sind. Die Rahmenkonstruktion 14 umfasst unter anderem auch einen Unterfahrschutz sowie einen vorderen Querträger, an welchem beispielsweise ein Frontmodul befestigt werden kann.

Oberseitig des jeweiligen Rahmenelements 16 der Rahmenkonstruktion 14 ist pro Fahrzeugseite eine jeweilige Konsole 18 abgestützt und über mehrere Schraubverbindungen 20 befestigt. Diese Konsole 18 dient zur Aufnahme eines Lagerelements 22 am hinteren Ende eines pro Fahrzeugseite jeweils vorgesehenen, in den Figuren lediglich gestrichelt angedeuteten Lenkers 24, welcher auf im Weiteren noch näher beschriebene Weise Teil eines Stabilisatorelements in Form einer Stabilisatorschwinge oder dergleichen ist. Jeder der beiden seitlichen Lenker 24 der Stabilisatorschwinge oder dergleichen Stabilisatorelements ist dabei vorderseitig mit einem zugehörigen Feder-Dämpfer-Element verbunden, mittels welchem das Fahrerhaus einerseits nach unten hin am seitlich korrespondierenden Rahmenelement 16 der Rahmenkonstruktion 14 des Tragrahmens 12 abgestützt ist, und auf welchem oberseitig die Tragstruktur des Fahrerhauses abgestützt ist. Damit handelt es sich vorliegend um eine Fahrerhauskomfortlagerung. Aus diesem Grund ist der seitlich angedeutete Lenker 24 auch nur gestrichelt angedeutet.

Die im Weiteren beschriebene Lagerungsanordnung kann jedoch ohne Weiteres auch bei einer Fahrerhausstandartlagerung zum Einsatz kommen. Hierauf wird später Bezug genommen.

Wie nun aus Fig. 1 erkennbar ist, ist das jeweilige Lagerelement 22 am hinteren Ende des korrespondierenden Lenkers 24 in einer Führung 26 der seitlich zugehörigen Konsole 18 gelagert. Diese Führung 26 ist vorliegend im Wesentlichen als Langloch oder dergleichen Schlitz ausgebildet. In der Ausgangsstellung befindet sich dabei das jeweilige Lagerelement 22 pro Fahrzeugseite am vorderen Ende der zugehörigen Führung 26 der entsprechenden, jeweiligen seitlich zugehörigen Konsole 18.

Weiterhin ist aus Fig. 1 erkennbar, dass das Lagerelement 22 über eine im Weiteren noch näher erläuterte Schwächungseinrichtung 28 mit dem seitlich zugeordneten Rahmenelement 10 des Tragrahmens verbunden ist. In diesem Zusammenhang sei angemerkt, dass vorliegend das jeweilige Rahmenelement 10 und das jeweilige Rahmenelement 16 pro Fahrzeugseite als zusammengehöriges Bauteil zu erachten sind. Es wäre also gegebenenfalls auch denkbar, dass sich die Konsole 18 am Rahmenelement 10 befindet oder aber, dass die Schwächungseinrichtung 28 am Rahmenelement 16 abgestützt ist.

Im vorliegenden Fall umfasst die Schwächungseinrichtung 28 ein Profilelement 30, welches über den zumindest überwiegenden Längenverlauf im Querschnitt zumindest im Wesentlichen U-förmig gestaltet ist. Nach hinten hin verjüngen sich dabei seitliche Schenkel 52 des Profilelements 30, wobei im Endbereich das Profilelement 30 lediglich einen unteren Schenkel 34 aufweist, in dessen Bereich die Schenkel 32 sich nicht mehr erstrecken. Somit ist der Schenkel 34 vorliegend im Wesentlichen eben und flach ausgebildet. Der Schenkel 34 dient dabei zur Aufnahme einer Schrauben-Hülse-Baueinheit 36, deren Schraube 38 den Schenkel 34 durchsetzt und mit einem Kopf 40 auf diesem abgestützt ist. Unterseitig des Schenkels 34 stützt sich mit einem oberen Ende eine Hülse 42 ab, welche sich nach unten hin auf einem Obergurt 44 des Rahmenelements 10 abstützt. Die Schraube 38 ist dabei auf ihrem den Kopf 40 abgewandten Seite mit dem Obergurt 44 verschraubt. Hierzu kann entweder im Obergurt 44 ein Gewinde vorgesehen sein oder aber unterseitig des Obergurts 44 eine Kontermutter, mittels welcher die den Obergurt 44 dann im Bereich einer Durchgangsöffnung durchsetzende Schraube 38 kontert. Im Ergebnis jedenfalls wird eine im Wesentlichen winkelförmige Ausgestaltung der Schwächungseinrichtung 28 erzielt, wobei sich vorliegend das Profilelement 30 - zumindest im Wesentlichen in Verlängerung der ebenfalls etwa horizontal verlaufenden Führung 26 - ebenfalls zumindest im Wesentlichen horizontal und in Fahrzeuglängsrichtung verläuft. Demgegenüber erstreckt sich die Schrauben-Hülse-Baueinheit 36 zumindest im Wesentlichen in Fahrzeughochrichtung. Auf der gegenüberliegenden Fahrzeugseite ist eine entsprechende Konstruktion in spiegelsymmetrischer Gestaltung vorgesehen.

Wird nun das Fahrerhaus beispielsweise beim Auffahren auf ein davor angeordnetes Hindernis, also beispielsweise bei einem Auffahrunfall, mit einer unfallbedingten Kraft beaufschlagt, wie dies in Fig. 2 mit einem Pfeil 46 angedeutet ist, so ergibt sich eine unfallbedingte Krafteinleitung auch in das Stabilisatorelement mit den jeweiligen seitlichen Lenkern 24, wodurch deren Lagerelement 22 entsprechend rückverlagert werden.

Anhand von Fig. 2 ist dies in einer ausschnittsweisen Seitenansicht der Lagerungsanordnung - analog zu Fig. 1 - dargestellt. Hierbei ist erkennbar, dass infolge der unfallbedingten Kraftbeaufschlagung gemäß dem Pfeil 46 das jeweilige seitliche Lagerelement 22 aus der vordersten Ausgangslage in eine hinterste Lage verlagert worden ist, wodurch auch die entsprechende Schwächungseinrichtung 28 mit einer entsprechenden Unfallkraft beaufschlagt worden ist. Diese unfallbedingte Kraftbeaufschlagung ergibt sich demzufolge auch eine Rückverlagerung des jeweiligen Profilelements 30 der Schwächungseinrichtung 28, wodurch die in der Ausgangslage zumindest im Wesentlichen senkrecht angeordnete Schrauben-Hülse-Baueinheit 36 entsprechend im Bereich ihres Kopfs 40 nach hinten verlagert worden ist. Diese Rückverlagerung führt dazu, dass im Bereich des Obergurts 44 eine entsprechende Deformation beziehungsweise Schwächung des Rahmenelements 10 erfolgt. Genauer gesagt wird der Obergurt 44 infolge der Rückverlagerung der Schrauben-Hülse-Baueinheit 36 im Bereich von deren Kopf 40 mit einer Mulde, Kerbe oder dergleichen Schwächung versehen. Da im Bereich der Befestigungsstelle der Schrauben-Hülse-Baueinheit 36 eine Materialschwächung in Form einer Durchgangsöffnung 50 in einem Schenkel 52 des Rahmenelements 10 vorgesehen ist, ergibt sich hierdurch eine gezielte Unterstützung dieser Schwächung 48.

Außerdem ist aus Fig. 2 erkennbar, dass das Profilelement 30 im Wesentlichen in Fahrzeuglängsrichtung nach hinten - also entsprechend der Orientierung der Führung 26 beziehungsweise der Kraftrichtung gemäß dem Pfeil 46 - verlagert worden ist, dass jedoch der Schenkel 34 des Profilelements 30 durch die Krafteinwirkung schräg nach unten abgebogen worden ist. Durch das Biegen des Schenkels 34 ergibt sich eine erwünschte Krafteinleitung in den Obergurt 44 des Rahmenelements 10, so dass sich dort die erwünschte Schwächung 48 ergibt.

Anhand von Fig. 3, welche die Lagerungsanordnung gemäß den Fig. 1 und 2 im weiteren Verlauf des Unfallszenarios zeigt, soll nun die weitere Wirkungsweise der Schwächung des jeweiligen Rahmenelements 10 erläutert werden. Infolge der weiteren Krafteinleitung der entsprechenden Unfallkraft gemäß dem Pfeil 46 kommt es nämlich im weiteren Verlauf des Unfallszenarios im Bereich der Materialschwächung 48 zu einem Umformbeziehungsweise Knickprozess, bei welchem die Rahmenelemente 10 zwar ihre Orientierung in Fahrzeuglängsrichtung beibehalten, jedoch mit ihren vorderen Enden beziehungsweise mit den Enden der Rahmenelemente 16 nach oben gebogen werden. Dies ergibt insgesamt ein bevorzugtes Unfallverhalten des Tragrahmens 12.

Durch die Schrauben-Hülse-Baueinheit 36 wird also gezielt der jeweilige Obergurt 44 des zugehörigen Rahmenelements 10 geschwächt, wodurch das Rahmenelement 10 insgesamt als Energie absorbierendes Crashelement wirken kann, indem es nach oben gebogen werden kann. Je nach dem, wie weit das jeweilige Lagerelement 22 innerhalb der Führung 26 nach hinten verlagert wird, ergibt sich eine unterschiedliche Schwächung 48 beziehungsweise Gestaltung des Obergurts 44 im Zwangsverformungsbereich (Öffnung 50), wodurch sich die Startkräfte beim Verformungsstart und somit die Verbindungskräfte der Schraubverbindungen beim Hochbiegen der Rahmenelemente 10 einstellen lassen. Im Ergebnis wird somit ein verbessertes Unfallverhalten des Lastkraftwagens erzielt.

Wie oben bereits erläutert worden ist, kann die Lagerungsanordnung auch bei einer Fahrerhausstandartlagerung zum Einsatz kommen. In diesem Fall entfällt das im Zusammenhang mit dem obigen Ausführungsbeispiel beschriebene Stabilisatorelement in Form der Stabilisatorschwinge, welche die jeweiligen, in den Figuren lediglich gestrichelt angedeuteten seitlichen Lenker 24 umfasst. Vielmehr ist bei der Fahrerhausstandartlagerung ein jeweiliges seitliches Fahrerhauslager unter Vermittlung eines entsprechenden Feder-Dämpfer-Elements unmittelbar über das entsprechende Lagerelement 22 an der seitlich zugeordneten, rahmenseitigen Konsole 18 in der Führung 26 gelagert ist. Insoweit ergibt sich zwischen der Fahrerhausstandartlagerung und der Fahrerkomfortlagerung lediglich eine andersartige Lagerung des Fahrerhauses insgesamt an der jeweiligen Konsole 18 unter Vermittlung des entsprechenden Lagerelements 26.

Für die Funktion der Schwächungseinrichtung 28 bedeutet dies, dass sowohl bei der Fahrerhausstandartlagerung als auch bei der Fahrerkomfortlagerung die gezielte Schwächung des Rahmenelements 10 des Tragrahmens 12 jeweils durch die unfallbedingten Verlagerung des Lagerelements 22 entlang der Führung 26 eingeleitet wird.

## Patentansprüche

1. Lagerungsanordnung für ein Fahrerhaus eines Lastkraftwagens, mit einer an einem seitlich zugehörigen Rahmenelement (10) eines Tragrahmens (12) des Lastkraftwagens befestigten jeweiligen, rahmenseitigen Konsole (18), welche eine Führung (26) umfasst, entlang welcher ein zugeordnetes Lagerelement (22) einer Fahrerhauslagerung bei einer unfallbedingten Kraftbeaufschlagung verlagerbar ist, **dadurch gekennzeichnet, dass**
das Lagerelement (22) mit dem seitlich zugeordneten Rahmenelement (10) des Tragrahmens (12) über eine Schwächungseinrichtung (28) verbunden ist, mittels welcher bei einer unfallbedingten Verlagerung des Lagerelements (22) das seitlich zugeordnete Rahmenelement (10) des Tragrahmens (12) gezielt schwächbar ist.

2. Lagerungsanordnung nach Anspruch 1,
**dadurch gekennzeichnet, dass**
die Schwächungseinrichtung (28) mit einem Obergurt (44) des seitlich zugeordneten Rahmenelements (16) verbunden ist, welcher bei einer unfallbedingten Verlagerung des seitlich zugeordneten Lagerelements (22) gezielt schwächbar ist.

3. Lagerungsanordnung nach Anspruch 1 oder 2,
**dadurch gekennzeichnet, dass**
das Rahmenelement (10) einen Schenkel (52) aufweist, welcher im Befestigungsbereich der Schwächungseinrichtung (28) eine Materialschwächung, insbesondere eine Öffnung, aufweist.

4. Lagerungsanordnung nach einem der vorhergehenden Ansprüche,
**dadurch gekennzeichnet, dass**
die Schwächungseinrichtung (28) ein mit dem Lagerelement (22) verbundenes Profilelement (30) umfasst, welche sich zumindest im Wesentlichen in Richtung der Führung (26) des Lagerelements (22) erstreckt.

5. Lagerungsanordnung nach Anspruch 4,
**dadurch gekennzeichnet, dass**
das Profilelement (30) über eine Schrauben-Hülse-Baueinheit (36) mit dem seitlich korrespondierenden Obergurt (44) des seitlich zugeordneten Rahmenelements (10) verbunden ist.

6. Lagerungsanordnung nach Anspruch 5,
**dadurch gekennzeichnet, dass**
das Profilelement (30) an seinem Ende einen freien Schenkel (32) aufweist, an welchem die Schrauben-Hülse-Baueinheit (36) befestigt ist.

7. Lagerungsanordnung nach einem der vorhergehenden Ansprüche,
**dadurch gekennzeichnet, dass**
sich die Führung (26) des Lagerelements (22) zumindest im Wesentlichen horizontal erstreckt.

8. Lagerungsanordnung nach einem der vorhergehenden Ansprüche,
**dadurch gekennzeichnet, dass**
sich der Lenker (24) zumindest im Wesentlichen horizontal erstreckt.

9. Lagerungsanordnung nach einem der vorhergehenden Ansprüche,
**dadurch gekennzeichnet, dass**
das Lagerelement (22) am Ende eines pro Fahrzeugseite vorgesehenen Lenkers (24) eines Stabilisatorelements, insbesondere einer Stabilisatorschwinge, angeordnet ist.

10. Lagerungsanordnung nach einem der Ansprüche 1 bis 8,
**dadurch gekennzeichnet, dass**
ein jeweiliges seitliches Fahrerhauslager unter Vermittlung eines entsprechenden Feder-Dämpfer-Elements über das entsprechende Lagerelement (22) an der seitlich zugeordneten, rahmenseitigen Konsole (18) in der Führung (26) gelagert ist.

## Claims

1. Mounting assembly for a cab of a lorry, with a frame-side console (18), which is secured to a laterally assigned frame element (10) of a supporting frame (12) of the lorry and comprises a guide (26), along which an assigned bearing element (22) of a cab mounting can be displaced at an accident-related application of force,
**characterised in that**
the bearing element (22) is connected to the laterally assigned frame element (10) via a weakening device (28), by means of which the laterally assigned frame element (10) of the supporting frame (12) can be weakened in a targeted manner at an accident-related displacement of the bearing element (22).

2. Mounting assembly according to claim 1,
**characterised in that**
the weakening device (28) is connected to a top chord (44) of the laterally assigned frame element (10), which top chord (44) can be weakened in a targeted manner at an accident-related displacement of the laterally assigned bearing element (22).

3. Mounting assembly according to claim 1 or 2,
**characterised in that**
the frame element (10) has a leg (51) with a material weakening, in particular an opening, in the mounting region of the weakening device (28).

4. Mounting assembly according to any of the preceding claims,
**characterised in that**
the weakening device (28) comprises a profile element (30), which is connected to the bearing element (22) and extends at least substantially in the direction of the guide (26) of the bearing element (22).

5. Mounting assembly according to claim 4,
**characterised in that**
the profile element (30) is connected to the laterally corresponding top chord (44) of the laterally assigned frame element (10) via a threaded sleeve unit (36).

6. Mounting assembly according to claim 5,
**characterised in that**
the profile element (30) has at its end a free leg (32), to which the threaded sleeve unit (36) is secured.

7. Mounting assembly according to any of the preceding claims,
**characterised in that**
the guide (26) of the bearing element (22) extends at least substantially horizontally.

8. Mounting assembly according to any of the preceding claims,
**characterised in that**
the link (24) extends at least substantially horizontally.

9. Mounting assembly according to any of the preceding claims,
**characterised in that**
the bearing element (22) is located at the end of a link (24) of a stabilising element, in particular of a stabiliser link, provided for each side of the vehicle.

10. Mounting assembly according to any of claims 1 to 8,
**characterised in that**
a respective lateral cab bearing is mounted on the laterally assigned frame-side console (18) in the guide (26) via the corresponding bearing element (22) with the interposition of a corresponding spring damping element.

## Revendications

1. Ensemble palier pour une cabine de conducteur de poids lourd, comprenant une console (18) respective côté cadre fixée à un élément de cadre (10) correspondant d'un cadre de support (12) du poids lourd, ladite console comprenant un guide (26) le long duquel un élément de support (22) d'un palier de cabine de conducteur peut être déplacé lors d'une application de force liée à un accident, **caractérisé en ce que** l'élément de support (22) est relié à un élément de cadre (10) associé latéralement du cadre de support (12) au moyen d'un dispositif d'atténuation (28) au moyen duquel lors d'un déplacement de l'élément de support (22) en raison d'un accident l'élément de cadre (10) associé latéralement du cadre de support (12) est atténué de manière ciblée.

2. Ensemble palier selon la revendication 1, **caractérisé en ce que** le dispositif d'atténuation (28) est relié à une sangle supérieure (44) de l'élément de cadre (16) associé latéralement qui peut être atténué de manière ciblée lors d'un déplacement de l'élément de cadre (22) associé latéralement en cas d'accident.

3. Ensemble de palier selon la revendication 1 ou la revendication 2, **caractérisé en ce que** l'élément de cadre (10) présente un montant (52) qui présente dans la zone de fixation du dispositif d'atténuation (28) une atténuation de matériau en particulier un orifice.

4. Ensemble de palier selon l'une quelconque des revendications précédentes, **caractérisé en ce que** le dispositif d'atténuation (28) comprend un élément profilé (30) relié à l'élément de support (22) qui s'étend au moins essentiellement dans la direction du guide (26) de l'élément de support (22).

5. Ensemble de palier selon la revendication 4, **caractérisé en ce que** l'élément profilé (30) est relié au moyen d'une unité de construction vis-douille (36) à la sangle supérieure correspondante latéralement (44) de l'élément de cadre (10) associé latéralement.

6. Ensemble de palier selon la revendication 5, **caractérisé en ce que** l'élément profilé (30) présente sur son extrémité un montant libre (32) sur lequel est fixée l'unité de construction vis-douille (36).

7. Ensemble de palier selon l'une quelconque des revendications précédentes, **caractérisé en ce que** le guide (26) de l'élément de support (22) s'étend au moins sensiblement à l'horizontal.

8. Ensemble de palier selon l'une quelconque des revendications précédentes, **caractérisé en ce que** la barre de liaison (24) s'étend au moins sensiblement à l'horizontal.

9. Ensemble de palier selon l'une quelconque des revendications précédentes, **caractérisé en ce que** l'élément de support (22) est disposé sur l'extrémité d'une barre de liaison (24) d'un élément de stabilisateur, disposée de chaque côté du véhicule, en particulier d'une bielle oscillante de stabilisateur.

10. Ensemble de palier selon l'une quelconque des revendications 1 à 8, **caractérisé en ce qu'**un support de cabine de conduite latéral respectif par l'intermédiaire d'un élément ressort-amortisseur au moyen de l'élément de support (22) correspondant est monté sur la console (18) côté cadre, associé latéralement, dans le guide (26).
